Europäisches Patentamt

European Patent Office

Office européen des brevets

(11) Publication number: **0 072 071**
**B1**

(12) **EUROPEAN PATENT SPECIFICATION**

(45) Date of publication of patent specification: **06.02.85**

(51) Int. Cl.⁴: **C 03 B 37/025**

(21) Application number: **82200966.8**

(22) Date of filing: **28.07.82**

(54) **Method for the continuous production of preforms for the manufacture of optical fibres by depositing glass layers onto a cylindrical starting rod.**

(30) Priority: **03.08.81 NL 8103647**

(43) Date of publication of application:
**16.02.83 Bulletin 83/07**

(45) Publication of the grant of the patent:
**06.02.85 Bulletin 85/06**

(84) Designated Contracting States:
**DE FR GB NL**

(56) References cited:
**EP-A-0 018 704**
**EP-A-0 043 708**
**FR-A-2 447 890**
**GB-A-2 081 250**
**US-A-3 957 474**

(73) Proprietor: **N.V. Philips' Gloeilampenfabrieken**
**Groenewoudseweg 1**
**NL-5621 BA Eindhoven (NL)**

(72) Inventor: **Severin, Petrus J.W.**
**c/o Int.Octrooibureau B.V. Prof.Holstlaan 6**
**NL-5656 AA Eindhoven (NL)**

(74) Representative: **Auwerda, Cornelis Petrus et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to method of producing optical fibres by means of a flame hydrolysis or oxidation process wherein a plurality of layers of glass particles having a composition in conformity with the desired refractive index profile are deposited in a glass deposition zone onto a rotating cylindrical starting rod by means of at least one burner to which a mixture of glass-forming materials is supplied, the rod is removed after a number of layers sufficient for the object aimed at have been deposited, the number obtained is sintered and fibres are manufactured from the sintered body by drawing. The drawing may be performed either by direct drawing of the member in which the central hole collapse or by first collapsing the member into a solid preform and drawing the preform.

United States Patent Specification US—A—3,826,560 discloses a method as specified above in which a mixture of suitable starting materials ($SiCl_4$, $BCl_3$, $POCl_3$, $GeCl_4$, $O_2$) is caused to react in a flame ($CH_4/O_2$ or $H_2/O_2$), fine glass particles of a high purity then being formed. The flow of hot glass particles is directed onto a starting rod rotating about its longitudinal axis and which translates with respect to the burner. A porous, coherent, cylindrical member of glass particles consisting of successively deposited layers is formed on the rod. By varying the flows of starting materials to the burner, the refractive index of the deposited glass particles can be varied according to the requirements. In this manner, it is possible to produce preforms for the manufacture of stepped index fibres and of graded index fibres. The porous preform is removed from the cylindrical starting rod and sintered into a solid preform and drawn into a fibre. During sintering the preform may be subjected to an additional special chlorine treatment in order to reduce the water content to a sufficiently low value.

This known method has the disadvantage that in this form it is not continuous. It is a known fact in the chemical processing industry that the constantness of quality of a product is considerably improved if the product can be produced continuously from the raw materials. Considered from this point of view a process in which material is deposited batchwise is inferior to processes which may in principle be effected continuously such as, for example, the double crucible method and the vapour axial deposition technique (see United States Patent Specification US—A—4,062,665).

The present invention has therefore for its object to provide a method of the above-mentioned type which is suitable for continuous production.

This object is accomplished by means of a method of the kind specified in the first paragraph of page 2, which is characterized in that said rotating starting rod is an endless starting rod which is passed at a constant rate along said glass deposition zone, in which zone at least one burner is reciprocated over a fixed distance parallel to the translation direction of the starting rod, glass particles being deposited onto the starting rod at least when the burner(s) is (are) moved contrary to the direction in which the starting rod moves.

An endless rod is here understood to mean a rod which during the deposition process is extended by fitting an additional section to it at regular intervals. This can, for example, be realized by means of extender sections one end of which is provided with a threaded, narrowed portion and the other end with an axial opening having an internal screwthread into which the narrowed portion of an extender section can be screwed.

The burner may be in the form of a flame hydrolysis burner described in United States Patent Specification US—A—3,826,560 or in the form of a plasma burner (see Kikuchi Fujitsu Sci. Tech. J. *11*, 99 (1975)), the plasma being obtained with an electric R. F. field, or a plasma burner in which the plasma is obtained by means of an electric field having a frequency in the microwave range. In this connection, a burner is generally understood to mean an arrangement to which the starting materials ($SiCl_4$, $BCl_3$, $POCl_3$, $GeCl_4$, $SiF_4$, $O_2$) are applied and in which the starting materials are reacted with each other while forming a stream of glass particles as a high temperature.

If in the method according to the invention glass particles are only deposited onto the cylindrical starting rod during movement of the burner contrarily to the direction of translation of the rod, the formation of glass particles must be regularly interrupted, such an interruption may be effected by interrupting the supply of glass-forming material to the burner during the back stroke of the burner. In this embodiment the composition of the mixture of glass-forming materials must however be modified rather abruptly in view of the required difference in refractive indices between the circumference of the preform and the core thereof. If, in addition, a high yield of deposited glass particles per unit of time is aimed at, one wants to return the burner, after a deposition run has been performed at a predetermined speed of the burner, at a greater speed to its starting position. Consequently, the control of the manufacturing process in this embodiment is rather complicated.

Therefore, in a preferred embodiment of the method according to the invention, glass particles are deposited both when the burner moves contrarily to the direction of translation of the rod and when the burner moves in the same direction as the direction of translation of the rod. This embodiment has the following advantages: The process is controllable to a better extent, particularly when manufacturing graded index fibres in which the composition of the mixture of glass-forming materials can be changed continuously, both during the forward and the backward strokes of the burner. With this embodiment it is however also possible to produce stepped index fibres. In that event the composition of the mixture of glass-forming materials is always constant during a part of the deposition period. The composition is rapidly modified at the transition from the core glass to the cladding glass and *vice versa*. An abrupt transition is however not necessary. This is bound up with the fact that in the method according to the invention the layers are applied at an angle; the concentration gradient perpendicularly to the axis is then automatically steeper than towards the layers. A further advantage is the higher yield of deposited glass particles per unit of time.

The preferred embodiment of the method is preferably performed in such a manner that the speed at which the burner moves between the points at which the movement reverses is kept constant to the best possible extent and the gas composition is varied continuously (graded index) or regularly in steps (stepped index).

The speed at which the burner moves, the width of the path of deposited glass particles, the translation speed of the cylindrical starting rod and the rotational speed of the rod are preferably brought into harmony in such a manner that the glass particles are deposited in only slightly overlapping parts at an angle to the axis of the rod. The relevant angle may be for example between 5° and 45°, although for efficiency the angle must not be chosen too wide. The translation of the rod during a complete rotation should thereby be somewhat smaller than the width of the deposited path of glass particles.

The European patent application EP—A1—18704 teaches a method of forming an optical waveguide blank in which stationary burners deposit a particulate material of unvarying composition on a core member which is not afterwards removed from the blank.

The French patent application FR—A—2447890 describes a method of forming preforms for optical fibres by depositing a particulate material from stationary burners on a mandrel. A relationship is taught between the refractive index of the deposited material and the position of the burners, the rate of movement of the mandrel and the composition of the feed of the burners. The method does not use an endless starting rod.

The earlier European patent application EP—A1—67050, published on 15.12.82 and therefore falling within the terms of Article 54.3 of the European Patent Convention, describes a method of forming optical waveguide fibres by depositing a particulate material of varying composition on a core from burners which move longitudinally with respect to a portion of the length of the core. This method uses a core which is produced by axial deposition of particulate glass material, or alternatively, the core may be a glass rod. In both cases, the core forms part of the resulting fibre. A removable mandrel is not described.

The invention will now be explained in greater detail by way of example with reference to the accompanying drawing.

In the drawings:

Fig. 1 shows schematically an arrangement for applying a layer of glass particles on an endless cylindrical starting rod.

Fig. 2 shows in detail a possibility of extending the rod.

Fig. 3 shows schematically an arrangement with three burners.

Fig. 4 shows graphically the variation in the dopant concentration during the production of a graded index fibre.

Fig. 5 shows graphically the variation in the dopant concentration during the production of a stepped index fibre.

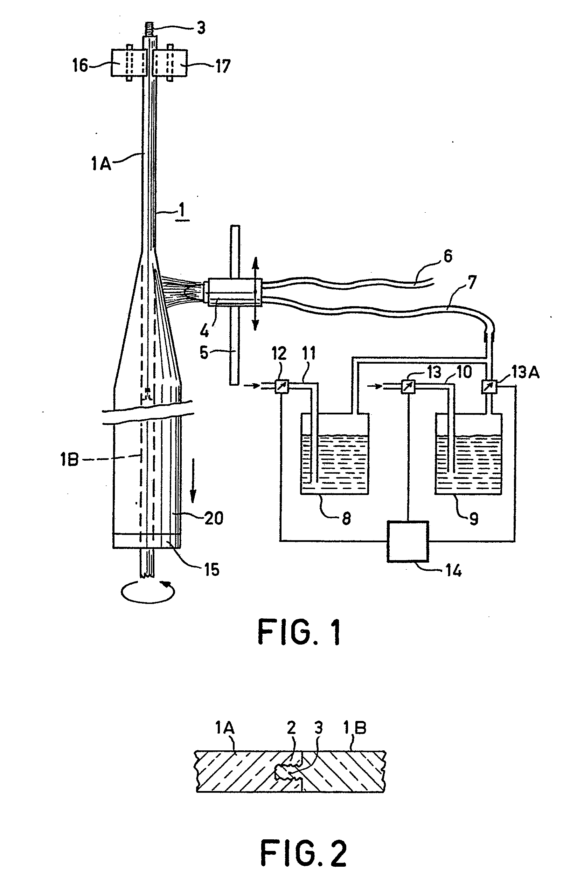

Fig. 1 shows schematically an arrangement for applying a layer of glass particles on a vertically arranged endless cylindrical starting rod 1. Rod 1 is formed from a number of extension members 1A, 1B, etc. which during the deposition process are fitted at regular intervals, depending on the speed of translation (the translation direction is shown in Figure 1 by means of an arrow pointing vertically down towards the bottom of the sheet). For this purpose the extension members 1A, and 1B may be provided at one end with an opening having an internal screwthread 2 (see Fig. 2) while the other end has a reduced diameter over a small part of its length and is externally provided with a screwthread 3. The extension members may consist of quartz, ceramic material (for example sintered $Al_2O_3$), carbon or of a metal coated with a $SiO_2$ or carbon layer or another material which prevents diffusion of metal ions into the deposited glass.

In addition, the arrangement shown in Fig. 1 has a burner 4 (flame hydrolysis burner) which can be reciprocated in a programmed manner along a vertical path 5. The burner 4 is connected by means of flexible pipes 6 and 7 to a gas supply arrangement which is partly shown in Fig. 1. A mixture of a combustible gas ($H_2$, $CH_4$) with oxygen is supplied to the burner 4 *via* the pipe 6. A mixture of oxygen and vapours of materials which, when reacted with oxygen form glass particles is fed *via* the flexible pipe 7 is the burner 4.

Fig. 1 further shows schematically two containers 8 and 9 (the number of containers may of course be larger depending on the number of dopants one wants to use). Container 8 holds $SiCl_4$ and container 9 holds $GeCl_4$. Oxygen is bubbled through the liquids *via* supply pipes 10 and 11. These supply pipes comprise controllable valves and controllers 12 and 13, 13A which are commonly referred to as mass flow controllers, by means of which it is possible to control the flow rate of the oxygen and consequently the quantities of metered $SiCl_4$ and $GeCl_4$ accurately by means of a control unit 14. The oxygen-vapour mixture is fed to the burner 4 *via* the pipe 7. Glass particles formed in the burner 4 are deposited onto the rod 1. The rod 1 is supported by a rotating table 15 and is rotated by three supporting wheels two of which, 16 and 17, are shown in Figure 1; the table 15 is translated vertically downwards.

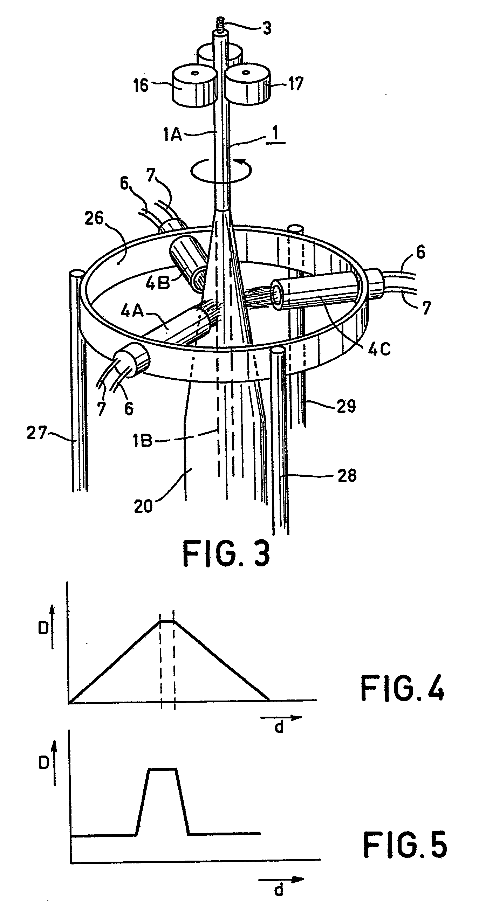

Fig. 1 shows one burner, it is however advantageous to arrange several burners, for example three burners, around the cylindrical starting rod, the burners are always supplied with the same gas-vapour mixture. Fig. 3 shows such an arrangement. Three burners 4A, 4B and 4C are fitted on a ring 26 which is connected to three rods 27, 28 and 29 which can be moved by means of a drive, not shown. The reference numerals in Figure 3 have the same meaning as in Figure 1. In this arrangement the burners 4A, 4B and 4C move simultaneously along the starting rod 1. It may be advantageous if the burners are not arranged in the same plane perpendicularly to the starting rod, but are so disposed with respect to each other that three layers are deposited on top of each other. The burners shown in Fig. 3 are directed at an angle of 120° with respect to each other at the starting rod.

Fig. 4 shows schematically the variation of the dopant concentration. According as the deposited path of glass particles approaches closer to the starting rod 1 the dopant concentration D increases. Thereafter a second path is deposited on the last path, the dopant concentration remains the same, thereafter the dopant concentration decreases again. In this way a graded index fibre can be obtained. The diameter of the preform is indicated by *d*.

Fig. 5 shows schematically the variation of the dopant concentration D during the manufacture of a stepped index fibre. After an initially low level (cladding) the dopant concentration increases to a higher value (core), remains constant for some time and decreases thereafter again.

In a given embodiment of the method the length of an extension member consisting of sintered $Al_2O_3$ is: 100 cm and its diameter 2 cm. The burner which deposits a 1 cm wide path of glass particles reciprocates over a distance of 40 cm at a speed of 4 cm per sec., the rotational speed of the starting rod 1 is then 4 revolutions per sec. and the translation speed 0.1 cm/sec. A preform 20 having a total diameter of 10 cm is obtained. At regular intervals a portion of the preform 20 is cut off, for example having a length of 100 cm. The starting rod 1 contained in this preform portion is removed and the preform is sintered in a customary manner and drawn into a fibre, for example in the manner as described in USP 3,826,560.

## Claims

1. Method of producing optical fibres by means of a flame hydrolysis of oxidation process wherein a plurality of layers of glass particles having a composition in conformity with the desired refractive index profile are deposited in a glass deposition zone onto a rotating cylindrical starting rod by means of at least one burner to which a mixture of glass-forming materials is supplied, the rod is removed after a number of layers sufficient for the object aimed at have been deposited, the member obtained is sintered and fibres are manufactured from the sintered body by drawing, characterized in that said rotating starting rod is an endless starting rod which is passed at a constant rate along said glass deposition zone, in which zone at least one burner is reciprocated over a fixed distance parallel to the translation direction of the starting rod, glass particles being deposited onto the starting rod at least when the burner(s) is (are) moved contrary to the direction in which the starting rod moves.

2. A method as claimed in Claim 1, characterized in that the starting rod is regularly extended during the deposition process at regular intervals by fitting a further extension member.

3. A method as claimed in Claim 1 or 2, characterized in that a burner is used to which a combustible gas and oxygen are supplied.

4. A method is claimed in any of Claims 1 to 3, characterized in that a plasma burner is used.

5. A method as claimed in any of Claims 1 to 4, characterized in that three burners are used which are directed at the starting rod at an angle of 120° relative to each other and are simultaneously reciprocated.

6. A method as claimed in any of Claims 1 to 5, characterized in that glass is deposited both when the burner moves contrarily to the direction in which the starting rod moves and when the burner moves in the same direction as the starting rod.

## Patentansprüche

1. Verfahren zur Herstellung optischer Fasern durch ein Flammhydrolyse- oder Oxydationsverfahren, wobei eine Anzahl Schichten von Glasteilchen mit einer Zusammensetzung entsprechend dem gewünschten Brechungsindexprofil in einer Glasniederschlagzone auf einem sich drehenden zylinderförmigen Ausgangsstab mit Hilfe mindestens eines Brenners, dem ein Gemisch aus glasbildenden Material hinzugeführt wird, niedergeschlagen wird, wobei der Stab nach einer für das gesetzte Ziel ausreichenden Anzahl niedergeschlagener Schichten entfernt wird, der erhaltene Körper gesintert wird und von dem Sinterkörper durch Ziehen Fasern hergestellt werden, dadurch gekennzeichnet, dass der genannte sich

7

**0 072 071**

8

drehende Ausgangsstab ein endloser Ausgangsstab ist, der mit einer konstanten Geschwindigkeit längs der genannten Glasniederschlagszone geführt wird, in welcher Zone mindestens ein Brenner über einen festen Abstand parallel zu der geradlinigen Bewegungsrichtung des Ausgangsstabs hin und her bewegt wird, wobei, wenigstens wenn der (die) Brenner in der entgegengesetzten Richtung des Ausgangsstab bewegt wird (werden) Glasteilchen auf dem Ausgangsstab niedergeschlagen werden.

2. Verfahren nach Anspruch 1, dadurch gekennzeichnet, dass der Ausgangsstab während des Niederschlagsvorganges in regelmässigen Abständen dadurch regelmässig verlängert wird, dass eine weiterer Verlängerungsteil daran befestigt wird.

3. Verfahren nach Anspruch 1 oder 2, dadurch gekennzeichnet, dass ein Brenner verwendet wird, dem ein brennbares Gas und Sauerstoff zugeführt werden.

4. Verfahren nach Anspruch 1—3, dadurch gekennzeichnet, dass ein Plasmabrenner verwendet wird.

5. Verfahren nach einem der Ansprüche 1—4, dadurch gekennzeichnet, dass drei Brenner verwendet werden, die gegenüber einander in einem Winkel von 120° auf den Ausgangsstab gerichtet sind und gleichzeitig hin und her bewegt werden.

6. Verfahren nach einem der Ansprüche 1—5, dadurch gekennzeichnet, dass bei der Bewegung des Brenners entgegen der Bewegungsrichtung des Ausgangsstabs sowie bei Bewegung des Brenners in derselben Bewegungsrichtung des Ausgangsstabs Glas niedergeschlagen wird.

**Revendications**

1. Procédé pour la réalisation de fibres optiques par hydrolyse par flammes ou un processus d'oxydation, selon lequel une pluralité de couches en particules de verre présentant une composition conforme au profil à indice de réfraction désiré est déposée dans une zone de dépôt de verre sur une barre cylindrique à rotation à l'aide d'au moins un brûleur auquel est amené un mélange de matériaux formateurs de verre, la barre est enlevée après dépôt d'un nombre de couches suffisant pour le but visé, l'élément obtenu est fritté et des fibres sont réalisées à partir du corps fritté par étirage, caractérisé en ce que ladite barre de départ en rotation est une barre de départ sans fin, qui passe à une vitesse constante le long de ladite zone de dépôt de verre, zone dans laquelle au moins un brûleur est animé de mouvements de va-et-vient sur une distance fixe parallèlement à la direction de translation de la barre de départ, des particules de verre étant déposées sur la barre de départ au moins lorsque le(s) brûleur(s) est (sont) déplacé(s) dans une direction opposée à la direction dans laquelle se déplace la barre de départ.

2. Procédé selon la revendication 1, caractérisé en ce que la barre de départ est allongée de façon régulière pendant le processus de dépôt à des intervalles réguliers par fixation d'un autre élément d'allongement.

3. Procédé selon la revendication 1 ou 2, caractérisé par l'utilisation d'un brûleur auquel sont amenés du gaz combustible et de l'oxygène.

4. Procédé selon l'une des revendications 1 à 3, caractérisé par l'utilisation d'un brûleur à plasma.

5. Procédé selon l'une des revendications 1 à 4, caractérisé par l'utilisation de trois brûleurs qui sont dirigés vers la barre de départ à un angle de 120°, l'un par rapport à l'autre, et qui sont amenés de mouvements de va-et-vient simultanés.

6. Procédé selon l'une des revendications 1 à 5, caractérisé en ce que du verre est déposé tant pendant le déplacement du brûleur dans une direction opposée à la direction de déplacement de la barre que pendant le déplacement du brûleur dans la même direction que la barre de départ.

5

FIG. 1

FIG. 2

0 072 071

FIG. 3

FIG. 4

FIG. 5